(19) **Europäisches Patentamt / European Patent Office / Office européen des brevets**

(11) **EP 4 664 558 A1**

(12) **EUROPEAN PATENT APPLICATION**
published in accordance with Art. 153(4) EPC

(43) Date of publication:
**17.12.2025 Bulletin 2025/51**

(21) Application number: **24785172.8**

(22) Date of filing: **02.04.2024**

(51) International Patent Classification (IPC):
*H01M 4/525* (2010.01)   *H01M 4/505* (2010.01)
*H01M 4/131* (2010.01)   *H01M 10/052* (2010.01)
*H01M 4/02* (2006.01)

(52) Cooperative Patent Classification (CPC):
Y02E 60/10

(86) International application number:
**PCT/KR2024/004255**

(87) International publication number:
**WO 2024/210467 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.04.2023 KR 20230043513**

(71) Applicant: **LG CHEM, LTD.**
**Seoul 07336 (KR)**

(72) Inventors:
 • **CHEONG, Sang Hun**
 **Daejeon 34122 (KR)**
 • **LEE, Sang Won**
 **Daejeon 34122 (KR)**
 • **JANG, Ho Yeok**
 **Daejeon 34122 (KR)**
 • **JEONG, Jong Seok**
 **Daejeon 34122 (KR)**
 • **KANG, Ho Sung**
 **Daejeon 34122 (KR)**
 • **PARK, Je Seob**
 **Daejeon 34122 (KR)**
 • **OH, Myoung Hwan**
 **Daejeon 34122 (KR)**
 • **KIM, Jun Gyu**
 **Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, AND CATHODE AND LITHIUM SECONDARY BATTERY COMPRISING SAME**

(57) The present invention relates to a cathode active material, and a cathode and a lithium secondary battery, comprising same and, particularly, to a cathode active material, and a cathode and a lithium secondary battery, comprising same, the cathode active material comprising a lithium transition metal oxide having a single crystallization degree (X) of 0.50 to 0.75 according to formula 1, wherein the lithium transition metal oxide is in the form of a single particle. In formula 1, $a_i$ represents a value ($A_i/A$) of the cross-sectional area ($A_i$) of the ith crystalline particle relative to the single particle cross-sectional area (A) when the single particle consists of i crystalline particles.

FIG. 1

**Description**

**TECHNICAL FIELD**

Cross-reference to Related Applications

This application claims priority from Korean Patent Application No. 10-2023-0043513, filed on April 3, 2023, the disclosure of which is incorporated by reference herein.

Technical Field

The present invention relates to a positive electrode active material for a lithium secondary battery, and a positive electrode and a lithium secondary battery which include the same.

**BACKGROUND ART**

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium cobalt oxide ($LiCoO_2$), nickel-based lithium transition metal oxide, lithium manganese oxide ($LiMnO_2$ or $LiMn_2O_4$), or a lithium iron phosphate compound ($LiFePO_4$) has been used as a positive electrode active material of the lithium secondary battery. Among them, the lithium cobalt oxide ($LiCoO_2$) has been widely used because it has an advantage of high operating voltage and excellent capacity characteristics, and has been used as a positive electrode active material for high voltage. However, due to an increase in the price of cobalt (Co) and supply instability, there is a limitation in using a large amount of the lithium cobalt oxide as a power source for applications such as electric vehicles, and thus, there is a need to develop a positive electrode active material that may replace the lithium cobalt oxide.

Accordingly, a nickel-based lithium transition metal oxide, in which a portion of cobalt (Co) is substituted with nickel (Ni) or the like, represented by a nickel cobalt manganese-based lithium transition metal oxide has been developed.

The conventionally developed nickel-based lithium transition metal oxide is in a form of a secondary particle in which fine primary particles having a micro average particle diameter ($D_{50}$) are aggregated, wherein it has a large surface area and low particle strength. Thus, in a case in which an electrode is prepared with a positive electrode active material including secondary particles, in which fine primary particles are aggregated, and then rolled, there has been a problem in that an amount of gas generated during cell operation is large due to severe particle cracking and stability is poor. Particularly, with respect to a high nickel-based (high-Ni) lithium transition metal oxide in which an amount of nickel (Ni) is increased to ensure high capacity, chemical stability is further reduced due to the structural problem described above, and it is also difficult to secure thermal stability.

In order to improve the disadvantages of the above-described conventional nickel-based lithium transition metal oxide in the form of a secondary particle in which the fine primary particles are aggregated, a nickel-based lithium transition metal oxide positive electrode active material in a form of a secondary particle, in which macro primary particles having a large average particle diameter ($D_{50}$) are aggregated, has been proposed.

Since the nickel-based lithium transition metal oxide positive electrode active material in the form of a secondary particle, in which the macro primary particles are aggregated, minimizes an interface between the secondary particles, problems, such as thermal stability, lifetime degradation due to a side reaction during an electrochemical reaction, and gas generation, are improved.

A high-Ni lithium transition metal oxide positive electrode active material typically undergoes a washing process to reduce an amount of lithium impurities remaining on a surface. The washing process is advantageous in reducing the gas generation because it removes a lithium by-product on the surface, but it is disadvantageous in terms of lifetime due to surface damage to the positive electrode active material particles. Particularly, the nickel-based lithium transition metal oxide positive electrode active material in the form of a secondary particle, in which the micro primary particles are aggregated, inherently has a problem with poor life characteristics, wherein, if it undergoes the washing process, the life characteristics are more degraded, and resistance is also increased as charge and discharge progress.

[Prior Art Documents]

[Patent Document]

(Patent Document 1) Korean Patent Application Laid-open Publication No. 10-2014-0093529

## DISCLOSURE OF THE INVENTION

### TECHNICAL PROBLEM

An object of the present invention is to provide a positive electrode active material which may improve initial charge and discharge capacities and efficiency of a battery and may reduce a gas generation amount.

### TECHNICAL SOLUTION

In order to solve the above-described tasks, the present invention provides a positive electrode active material, a positive electrode, and a lithium secondary battery.

(1) The present invention provides a positive electrode active material including a lithium transition metal oxide with a degree of single-crystal formation (X) according to Equation 1 of 0.50 to 0.75, wherein the lithium transition metal oxide is in a form of a single particle.

$$[\text{Equation 1}]$$

$$X = \sum_i a_i^2$$

In Equation 1,
when the single particle is composed of i grains, $a_i$ means a value ($A_i/A$) of a cross-sectional area ($A_i$) of an $i_{th}$ grain to a cross-sectional area (A) of the single particle.

(2) The present invention provides the positive electrode active material of (1) above, wherein the degree of single-crystal formation (X) is in a range of 0.60 to 0.75.

(3) The present invention provides the positive electrode active material of (1) or (2) above, wherein the single particle has an average particle diameter ($D_{50}$) of 1.5 $\mu$m or more.

(4) The present invention provides the positive electrode active material of any one of (1) to (3) above, wherein the single particle has a Brunauer-Emmett-Teller (BET) specific surface area of 0.50 $m^2/g$ or less.

(5) The present invention provides the positive electrode active material of any one of (1) to (4) above, wherein the lithium transition metal oxide is represented by Formula 1.

[Formula 1]           $Li(Ni_{1-x-y-z}Co_xMn_yM_z)O_2$

In Formula 1,

M is at least one selected from the group consisting of aluminum (Al), iron (Fe), vanadium (V), chromium (Cr), titanium (Ti), tantalum (Ta), magnesium (Mg), and molybdenum (Mo), and

x, y, and z are atomic fractions of independent elements, respectively, wherein $0 \leq x \leq 0.2$, $0 \leq y \leq 0.2$, $0 \leq z < 1$, and $0 \leq x+y+z < 1$.

(6) Also, the present invention provides a positive electrode including the positive electrode active material of any one of (1) to (5) above.

(7) Furthermore, the present invention provides a lithium secondary battery including the positive electrode of (6) above.

## ADVANTAGEOUS EFFECTS

Since a positive electrode active material according to the present invention is in a form of a single particle and includes a lithium transition metal oxide with a degree of single-crystal formation (X) of 0.50 to 0.75, it reduces a phenomenon of fine particle generation due to particle cracking, improves initial charge and discharge capacities and efficiency of a battery when used as a positive electrode active material in the lithium secondary battery, and reduces a gas generation amount, and thus, it may significantly improve stability of the battery.

## BRIEF DESCRIPTION OF THE DRAWINGS

FIG. 1 illustrates scanning electron microscope (SEM) images of positive electrode active materials of Example 1 and Comparative Examples 1 to 3 ((A): Example 1, (B) Comparative Example 1, (C): Comparative Example 2, (D): Comparative Example 3).
FIG. 2 is a reference view for illustrating extraction of particles from an electron backscatter diffraction (EBSD) image, wherein it is a view illustrating extraction of particle regions from the EBSD image by applying the particle regions extracted from an SEM image to the EBSD image.
FIG. 3 is a graph illustrating distributions of degrees of single-crystal formation of the positive electrode active materials of Example 1 and Comparative Examples 1 to 3.
FIG. 4 is a graph illustrating gas generation amounts according to storage period of mono-cells using the positive electrode active materials of Example 1 and Comparative Example 1.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "primary particle" denotes a smallest particle unit which is distinguished as one body when a cross section of a positive electrode active material is observed through a scanning electron microscope (SEM), wherein it may be composed of one crystallite or a plurality of crystallites. In the present invention, an average particle diameter of the primary particle may be measured by a method of measuring a size of each particle distinguished from cross-sectional SEM data of the positive electrode active material particles and then calculating an arithmetic average value thereof.

In the present invention, a "single particle" is a term used to distinguish from a positive electrode active material particle in a form of a secondary particle formed by aggregation of tens to hundreds of primary particles which has been conventionally commonly used, wherein it is a concept that includes a single particle composed of one primary particle and an aggregate particle of 10 or less primary particles.

In the present invention, an "average particle diameter ($D_{50}$)" may be defined as a particle diameter on the basis of 50% in a volume cumulative particle diameter distribution, and may be measured by using a laser diffraction method. Specifically, after dispersing target particles in a dispersion medium, the dispersion medium is introduced into a commercial laser diffraction particle size measurement instrument (e.g., Microtrac MT 3000) and irradiated with ultrasonic waves of about 28 kHz at an output of 60 W, and the average particle diameter $D_{50}$ based on 50% in a volume cumulative distribution according to the particle diameter in the measurement instrument may then be calculated.

In the present invention, a "single crystal" means a crystal in a state in which it does not include a grain boundary in the particle.

In the present invention, a "grain" means a particle unit having substantially the same crystal orientation, and may be measured by EBSD (Electron Backscatter Diffraction). Specifically, the grain is the smallest particle unit displayed in the same color in an inverse pole figure (IPF) map which is obtained by EBSD analysis of a cross section of a positive electrode active material that is cut by ion milling.

Hereinafter, the present invention will be described in detail.

The positive electrode active material of the present invention is characterized in that it includes a lithium transition metal oxide with a degree of single-crystal formation (X) calculated according to Equation 1 below of 0.50 to 0.75, wherein the lithium transition metal oxide is in a form of a single particle.

[Equation 1]

$$X = \sum_i a_i^2$$

In Equation 1,
when the single particle is composed of i grains, $a_i$ means a value ($A_i/A$) of a cross-sectional area ($A_i$) of an $i_{th}$ grain to a cross-sectional area (A) of the single particle.

An object of the present invention is to provide a positive electrode active material including a lithium transition metal oxide satisfying a degree of single-crystal formation (X) of 0.50 to 0.75 while being in the form of a single particle.

In the present invention, the degree of single-crystal formation was evaluated and expressed as a parameter represented by Equation 1. The degree of single-crystal formation as defined in the present invention is a value that is adjusted according to the number of grains constituting one single particle and an area of each grain, wherein the higher the area of a specific grain having the largest area within the one single particle is closer to an area of the entire single particle, the higher the degree of single-crystal formation appears.

That is, the lower the number of grains constituting the single particle is, the higher the degree of single-crystal formation described in the present invention may be, and, if the number of grains is the same, the smaller the difference between the area of the entire single particle and an area of a specific grain, which has a larger area than the other grains, rather than the areas of all grains being similar, the higher the degree of single-crystal formation.

For example, a maximum value of the degree of single-crystal formation is 1, and this means that one single particle is composed of one grain. Also, when one single particle is composed of N grains, the degree of single-crystal formation varies depending on the area of each grain, but a minimum value of the degree of single-crystal formation, which may be obtained when there are N grains, is 1/N, and it is obtained when all N grains have the same area. Even if one single particle is composed of N grains, if a specific grain has a larger area than the other grains, the degree of single-crystal formation is higher than 1/N, and the reason for this is that its shape is closer to that of a single crystal when the specific grain has the largest area than when the N grains have the same area.

From this point of view, the smaller the area of the added grain is, the smaller the degree of single-crystal formation decreases, and the reason for this is that, since the small-sized grain has a smaller area than the entire particle, it has a lower effect on reducing the degree of single-crystal formation.

As shown in Equation 1, the lithium transition metal oxide included in the positive electrode active material of the present invention has the degree of single-crystal formation represented by Equation 1 of 0.50 to 0.75. Specifically, the degree of single-crystal formation represented by Equation 1 of the lithium transition metal oxide may be 0.50 or more, 0.51 or more, 0.52 or more, 0.53 or more, 0.54 or more, 0.55 or more, 0.56 or more, 0.57 or more, 0.58 or more, 0.59 or more, or 0.60 or more, and may be 0.65 or less, 0.66 or less, 0.67 or less, 0.68 or less, 0.69 or less, 0.70 or less, 0.71 or less, 0.72 or less, 0.73 or less, 0.74 or less, or 0.75 or less. More specifically, the lithium transition metal oxide may have the degree of single-crystal formation represented by Equation 1 of 0.60 to 0.75.

Since the lithium transition metal oxide has the degree of single-crystal formation within the above range, it may be understood that the lithium transition metal oxide of the present invention is in the form of a single particle in which aggregation between particles is suppressed. Accordingly, since particle cracking due to grain boundaries during electrode rolling and cell operation may be suppressed, gas generation is suppressed, and, since a grain boundary area in contact with an electrolyte solution is reduced, lifetime of a secondary battery may be significantly improved by controlling a side reaction with the electrolyte solution.

In a case in which the degree of single-crystal formation is less than 0.50, since there are many cases where many particles are aggregated together, fine powder is generated due to cracking during the electrode rolling, or an advantage of a single-particle positive electrode material, such as suppression of gas generation, does not appear, and, in a case in which the degree of single-crystal formation is greater than 0.75, it is mainly a case of oversintering or overgrinding, wherein there is a problem of capacity reduction for the case of oversintering, and there are problems, such as an increase in fine powder and a decrease in particle size of the positive electrode material, for the case of overgrinding.

In the present invention, an average particle diameter ($D_{50}$) of the single particle may be 1.5 μm or more, may specifically be 1.5 μm or more, 2.0 μm or more, 2.5 μm or more, 3 μm or more, 3.5 μm or more, or 4.0 μm or more, and may be 4.2 μm or less, 4.3 μm or less, 4.4 μm or less, 4.5 μm or less, 5.0 μm or less, 5.5 μm or less, or 6.0 μm or less.

Since the positive electrode active material of the present invention is in the form of a single particle, it has an advantage of reducing the gas generation and suppressing the particle cracking in comparison to a conventional secondary particle in which primary particles are aggregated. Also, in a case in which the average particle diameter of the single particle is within the above range, optimal physical properties may be exhibited because gas generation and side reaction due to an increase in specific surface area are suppressed, performance degradation due to capacity reduction and a decrease in rolling density may be prevented, and an increase in resistance is suppressed.

In the present invention, a Brunauer-Emmett-Teller (BET) specific surface area of the single particle may be 0.50 $m^2/g$ or less, and may specifically be 0.20 $m^2/g$ or more, 0.25 $m^2/g$ or more, 0.30 $m^2/g$ or more, 0.35 $m^2/g$ or more, or 0.40 $m^2/g$ or more, and may be 0.46 $m^2/g$ or less, 0.47 $m^2/g$ or less, 0.48 $m^2/g$ or less, 0.49 $m^2/g$ or less, or 0.50 $m^2/g$ or less.

Since the positive electrode active material of the present invention includes the lithium composite transition metal oxide satisfying a specific range of the degree of single-crystal formation, it has few grain boundaries, and thus, it may have a low BET specific surface area as described above.

In the present invention, the lithium transition metal oxide may be represented by Formula 1 below.

$$[\text{Formula 1}] \qquad Li(Ni_{1-x-y-z}Co_xMn_yM_z)O_2$$

In Formula 1,

M is at least one selected from the group consisting of aluminum (Al), iron (Fe), vanadium (V), chromium (Cr), titanium (Ti), tantalum (Ta), magnesium (Mg), and molybdenum (Mo), and

x, y, and z are atomic fractions of independent elements, respectively, wherein $0 \le x \le 0.2$, $0 \le y \le 0.2$, $0 \le z < 1$, and $0 \le x+y+z < 1$.

M is an element substituted at a transition metal site in the oxide represented by Formula 1, and may include at least one selected from the group consisting of Al, Fe, V, Cr, Ti, Ta, Mg, and Mo.

1-x-y-z represents a molar ratio of nickel among metallic components excluding lithium in the lithium transition metal oxide represented by Formula 1, wherein 1-x-y-z may satisfy $0.5 < 1-x-y-z < 1.0$, preferably, $0.55 \le 1-x-y-z \le 0.95$, $0.7 < 1-x-y-z < 1.0$, or $0.75 \le 1-x-y-z \le 0.95$.

x represents a molar ratio of cobalt among the metallic components excluding lithium in the lithium transition metal oxide represented by Formula 1, wherein x may satisfy $0 < x < 0.5$, preferably, $0.025 \le x \le 0.35$, or $0.025 \le x \le 0.15$.

y represents a molar ratio of manganese among the metallic components excluding lithium in the lithium transition metal oxide represented by Formula 1, wherein y may satisfy $0 < y < 0.5$, preferably, $0.025 \le y \le 0.35$, or $0.025 \le y \le 0.25$.

z represents a molar ratio of M among the metallic components excluding lithium in the lithium transition metal oxide represented by Formula 1, wherein z may satisfy $0 \le z \le 0.05$, preferably, $0 \le z \le 0.02$.

Also, the positive electrode active material may include a coating layer formed on a surface thereof, and the coating layer may include at least one selected from the group consisting of cobalt (Co), Al, tungsten (W), and B, and may preferably include B (boron).

Since the coating layer blocks a contact between the positive electrode active material and the electrolyte solution contained in the lithium secondary battery to suppress the occurrence of the side reaction, it may further improve life characteristics and may additionally increase packing density of the positive electrode active material.

The coating layer may be formed on the entire surface of the positive electrode active material, or may be partially formed. Specifically, in a case in which the coating layer is partially formed on the surface of the positive electrode active material, the coating layer may be formed in 20% or more to less than 100% of a total area of the positive electrode active material. In a case in which the area of the coating layer is less than 20%, effects of improving the life characteristics and improving the packing density due to the formation of the coating layer may be insignificant.

Furthermore, the positive electrode active material of the present invention may be prepared by a preparation method including the steps of: (S1) preparing a solid-phase raw material mixture including lithium raw material powder, nickel raw material powder, cobalt raw material powder, and manganese raw material powder such that a molar ratio of lithium to total transition metals is in a range of 0.90 to 1.10; (S2) performing primary sintering on the solid-phase raw material mixture and grinding; and (S3) mixing lithium raw material powder with a product of step (S2) such that a total molar ratio of lithium to total transition metals is in a range of 0.95 to 1.10 and performing secondary sintering.

Also, in the above method, temperature of the secondary sintering may be in a range of 600°C to 900°C, or 650°C to 880°C, more preferably, 700°C to 850°C.

The lithium transition metal oxide of the present invention is prepared through a solid-phase synthesis method using the solid-phase raw material mixture, wherein the solid-phase synthesis method has an advantage of being able to mass-produce the lithium transition metal oxide through a relatively simple synthesis process and is particularly advantageous for preparing high-nickel NCM with a high nickel content.

Also, since raw material particles are allowed to have a smaller size and are uniformly mixed by grinding and mixing processes, the particles grow smoothly at a lower temperature, and thus, an excellent degree of single-particle formation and sphericity may be exhibited.

In contrast, in a case in which a process of first preparing a positive electrode active material precursor and then using it to prepare a single-particle positive electrode active material slurry is used, that is, since single-particle formation may not proceed sufficiently due to non-smooth particle growth and an oversintering process is required, it may cause a reduction in capacity when using the battery for reasons such as formation of a rock-salt phase. Furthermore, since a precursor-based secondary particle form coexists, the sphericity and degree of single-particle formation may not be achieved to the extent desired by the present invention.

In the present invention, as the lithium raw material powder, for example, lithium-containing carbonates (e.g., lithium carbonate, etc.), lithium-containing hydrates (e.g., lithium hydroxide hydrate (LiOH·H$_2$O), etc.), lithium-containing hydroxides (e.g., lithium hydroxide, etc.), lithium-containing nitrates (e.g., lithium nitrate (LiNO$_3$), etc.), lithium-containing chlorides (e.g., lithium chloride (LiCl), etc.) may be used. Preferably, at least one selected from the group consisting of lithium hydroxide, lithium hydroxide hydrate, and lithium carbonate may be used as the first lithium raw material.

In the present invention, the nickel raw material powder means raw material powder containing only nickel to provide the nickel as a transition metal. The nickel raw material powder may be at least one selected from the group consisting of nickel oxide, nickel carbonate, nickel sulfate, nickel hydroxide, nickel phosphate, and nickel nitrate.

The cobalt raw material powder may be at least one selected from the group consisting of cobalt oxide, cobalt carbonate, cobalt sulfate, cobalt hydroxide, and cobalt phosphate.

The manganese raw material powder may be at least one selected from the group consisting of manganese dioxide, manganese carbonate, manganese sulfate, and manganese nitrate.

In the solid-phase raw material mixture prepared in step (S1), the lithium raw material powder, the nickel raw material powder, the cobalt raw material powder, and the manganese raw material powder are mixed in amounts such that a molar ratio of lithium to total transition metals is in a range of 0.90 to 1.10.

If the molar ratio of the lithium is less than 0.90, problems may occur in the formation of a composite transition metal phase according to solid-phase synthesis, and the lack of lithium may reduce discharge efficiency and may significantly increase surface resistance, and, if the mixing molar ratio is greater than 1.10, problems may occur in which residual lithium is increased and performance of the positive electrode active material is degraded.

The molar ratio of the lithium may be a condition controlled to prepare a positive electrode active material in the form of a single particle with a high degree of single-crystal formation as in the present invention.

Also, in the present invention, in order to prepare the positive electrode active material in the form of a single particle with a high degree of single-crystal formation, the particles may be filled with a packing density of 0.7 cc/g or more during sintering. In a case in which the packing density is within the above range, since a distance between the particles is decreased during the sintering, particle reaction and growth may be facilitated, and, accordingly, the degree of single-crystal formation of the positive electrode active material may be high.

In the present invention, the solid-phase raw material mixture is subjected to primary sintering and then ground.

The primary sintering may be performed at a temperature of 400°C to 900°C. When the temperature of the primary sintering is within the above range, an increase in unreacted residual lithium due to low reactivity between the lithium raw material powder and each of the transition metal raw material powders in the solid-phase raw material mixture, or a reduction in capacity and lifetime of the battery due to a lack of lithium in the positive electrode active material may be prevented. Also, the reduction in capacity and lifetime of the battery, which is caused by the degradation of the performance of the positive electrode active material due to local occurrence of an oversintering phenomenon caused by a non-uniform reaction during the primary sintering, may be prevented.

In the present invention, the solid-phase raw material mixture is subjected to primary sintering and then ground. Through the grinding, an average particle diameter (D$_{50}$) of a primary sintered product may be adjusted to a range of 2 $\mu$m to 4 um, or 3 $\mu$m to 4 $\mu$m, and a maximum particle diameter (Dmax) may be adjusted to 30 $\mu$m or less, or 20 $\mu$m or less. Through this grinding process, aggregation between particles during the sintering may be eliminated to suppress formation of a macro particle, and a desired-sized single particle having a uniform composition may be finally prepared.

The positive electrode active material of the present invention may be prepared through the step of mixing lithium raw material powder with the product of step (S2) such that a total molar ratio of lithium to total transition metals is in a range of 0.95 to 1.10 and performing secondary sintering.

If the total molar ratio of the lithium to the transition metals after the mixing of the lithium raw material powder is less than 0.95, problems may occur in the formation of the composite transition metal phase according to the solid-phase synthesis, and the lack of lithium may reduce the discharge efficiency and may significantly increase the surface resistance, and, if the total molar ratio of the lithium is greater than 1.10, problems may occur in which the residual lithium is increased and the performance of the positive electrode active material is degraded.

In the present invention, the temperature of the secondary sintering may be in a range of 500°C to 900°C, 600°C to 850°C, or 700°C to 800°C. Also, secondary sintering time may be in a range of 5 hours to 15 hours or 7 hours to 12 hours.

Since the secondary sintering is performed within the above range, insufficient particle growth during the primary sintering may be compensated by supplementing an additional lithium raw material depending on heat energy and circumstances and fine particles generated during the grinding process may be grown and absorbed to prepare a positive electrode active material having an appropriate particle size and a high degree of single-crystal formation.

In the present invention, the sintering may be performed in an oxygen or air atmosphere. In a case in which the sintering is performed in the above atmosphere, since a local oxygen partial pressure is increased, crystallinity of the positive electrode active material is improved and control of a surface phase is facilitated. In contrast, in a case in which the sintering is performed in an inert gas atmosphere or a non-oxidizing atmosphere other than the above-described atmosphere, the control of the phase present on the surface becomes difficult because the crystallinity is reduced due to oxygen desorption during the sintering and the surface phase is formed non-uniformly.

Also, the preparation method of the present invention may further include a step of washing the positive electrode active material synthesized by the above-described method.

For example, a lithium by-product present as impurities on the surface of the positive electrode active material may be effectively removed by mixing the positive electrode active material with a washing solution (preferably, distilled water) and washing it.

Additionally, the present invention may further include a step of forming a coating layer. Preferably, the coating layer may include an element such as B or Co, but the present invention is not limited thereto.

For example, the coating element may form a coating layer on the surface of the positive electrode active material through a heat treatment.

The heat treatment for the formation of the coating layer may be performed in a temperature range suitable for applying a coating material to the surface of the positive electrode active material, and may specifically be performed in a temperature range of 100°C to 800°C.

Also, the present invention provides a positive electrode for a lithium secondary battery which includes the positive electrode active material.

Specifically, the positive electrode includes a positive electrode collector, and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder together with the positive electrode active material.

In this case, the positive electrode active material may be included in an amount of 80 wt% to 99 wt%, more specifically, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a positive electrode material mixture, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive agent are the same as those previously described.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the positive electrode material mixture on a separate support and then laminating a film separated from the support on the positive electrode collector.

Furthermore, in the present invention, an electrochemical device including the positive electrode may be prepared. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, and, since the positive electrode is the same as described above, detailed descriptions thereof will be omitted and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 part by weight to 10 parts by weight based on 100 parts by weight of the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 part by weight to 5 parts by weight based on 100 parts by weight of a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

## Examples

Hereinafter, the present invention will be described in more detail according to examples. However, the following examples are merely presented to exemplify the present invention, and the scope of the present invention is not limited thereto.

### Example 1

Lithium (Li), nickel (Ni), Co, manganese (Mn), and Al raw materials were added to a mixer in amounts such that a molar ratio of Li:Ni:Co:Mn:Al was 0.97:0.93:0.05:0.01:0.01, and were mixed and ground using high-energy milling equipment. In this case, $LiOH \cdot H_2O$, $Ni(OH)_2$, $Co_3O_4$, $MnO_2$, and $Al_3O_4$ were used as the raw materials.

The mixed and ground raw materials were filled into a crucible at a density of 0.7 g/cc or more, and, after primary sintering was performed at 810°C for 10 hours in an oxygen atmosphere, a primary sintered product thus obtained was ground using a pneumatic grinder. In this case, a size of the primary sintered product was adjusted such that $D_{50}$ was in a range of 2 $\mu$m to 4 $\mu$m and $D_{max} > 20$ $\mu$m.

After mixing the ground primary sintered product with $LiOH \cdot H_2O$ such that a molar ratio of lithium to transition metals was 1.00, the mixture was secondarily sintered at 750° C for 5 hours, and then disintegrated with a pneumatic grinder to prepare a positive electrode active material.

### Comparative Example 1

After a $(Ni_{.94}Co_{0.05}Mn_{.01})(OH)_2$ precursor synthesized from metal-sulfate raw materials, $LiOH \cdot H_2O$, and an $Al_2O_3$ raw material were mixed in a stirring mixer in amounts such that a molar ratio of Li: (Ni+Co+Mn) :Al was 0.97:0.99:0.01 and primary sintering was then performed at 810°C for 10 hours in an oxygen atmosphere electric furnace, a primary sintered product thus obtained was ground using a pneumatic grinder. In this case, a size of the primary sintered product was adjusted such that $D_{50}$ was in a range of 2 $\mu$m to 4 $\mu$m and $D_{max} < 20$ $\mu$m.

After mixing the ground primary sintered product with $LiOH \cdot H_2O$ such that a molar ratio of lithium to transition metals was 1.00, the mixture was secondarily sintered at 750° C for 5 hours, and then disintegrated with a pneumatic grinder to prepare a positive electrode active material.

### Comparative Example 2

Li, Ni, Co, Mn, and Al raw materials were added to a mixer in amounts such that a molar ratio of Li:Ni:Co:Mn:Al was 0.97:0.93:0.05:0.01:0.01, and were mixed and ground using high-energy milling equipment. In this case, LiOH. $H_2O$, $Ni(OH)_2$, $Co_3O_4$, $MnO_2$, and $Al_3O_4$ were used as the raw materials.

The mixed and ground raw materials were filled into a crucible at a density of 0.6 g/cc or more, and, after primary sintering was performed at 810°C for 10 hours in an oxygen atmosphere, a primary sintered product thus obtained was ground using a mechanical grinder.

After mixing the ground primary sintered product with $LiOH \cdot H_2O$ such that a molar ratio of lithium to transition metals was 1.00, the mixture was secondarily sintered at 810° C for 5 hours to prepare a positive electrode active material.

### Comparative Example 3

Li, Ni, Co, Mn, and Al raw materials were added to a mixer in amounts such that a molar ratio of Li:Ni:Co:Mn:Al was 0.97:0.93:0.05:0.01:0.01, and were mixed and ground using high-energy milling equipment. In this case, LiOH. $H_2O$, $Ni(OH)_2$, $Co_3O_4$, $MnO_2$, and $Al_3O_4$ were used as the raw materials.

The mixed and ground raw materials were filled into a crucible at a density of 0.6 g/cc or more, and, after primary sintering was performed at 840°C for 10 hours in an oxygen atmosphere electric furnace, a primary sintered product thus obtained was ground using a pneumatic grinder. In this case, a size of the primary sintered product was adjusted such that $D_{50}$ was in a range of 2 $\mu$m to 4 $\mu$m and $D_{max} < 20$ $\mu$m.

After mixing the ground primary sintered product with $LiOH \cdot H_2O$ such that a molar ratio of lithium to transition metals was 1.00, the mixture was secondarily sintered at 780° C for 5 hours, and then disintegrated with a pneumatic grinder to prepare a positive electrode active material.

**Experimental Example 1**

(1) Particle Diameter

Using a laser scattering particle size distribution measurement instrument (model name: Partica LA-960V2, manufacturer: HORIBA), a particle diameter of each of the positive electrode active materials prepared in the example and the comparative examples was measured, and a minimum particle diameter, an average particle diameter, and a maximum particle diameter are presented in Table 1 below. In this case, N-methyl pyrrolidon (NMP) was used as a dispersion medium.

(2) BET Specific Surface Area

Using BELSORP-mini II by Bell Japan Inc., a specific surface area of each of the positive electrode active materials prepared in the example and the comparative examples was calculated by a Brunauer-Emmett-Teller (BET) method from a nitrogen gas adsorption amount at a liquid nitrogen temperature (77K), and presented in Table 1 below.

[Table 1]

|  | Minimum particle diameter ($D_{min}$) | Average particle diameter ($D_{50}$) | Maximum particle diameter ($D_{max}$) | BET specific surface area ($m^2$/g) |
|---|---|---|---|---|
| Example 1 | 1.39 | 4.10 | 12.97 | 0.45 |
| Comparative Example 1 | 1.19 | 3.92 | 12.96 | 0.62 |
| Comparative Example 2 | 1.20 | 4.85 | 21.84 | 0.52 |
| Comparative Example 3 | 1.67 | 4.57 | 12.03 | 0.40 |

(3) SEM Image

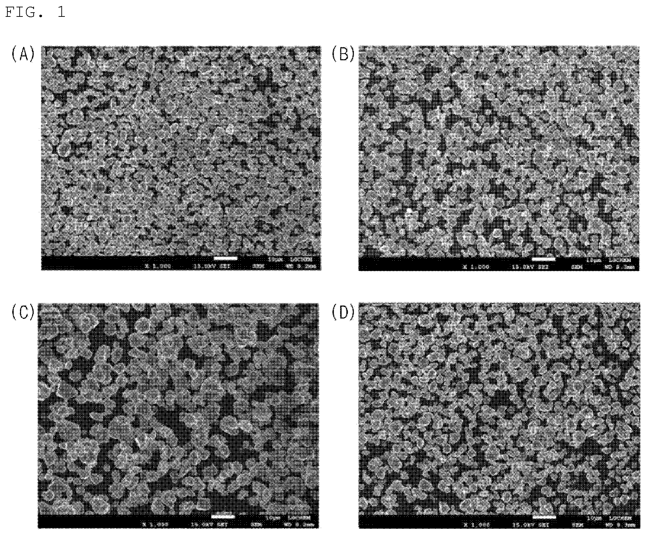

Using an SEM, an SEM image of each of the positive electrode active materials prepared in the example and the comparative examples was obtained and presented in FIG. 1.

FIG. 1 (A) is the SEM image of the positive electrode active material of Example 1, (B) is the SEM image of the positive electrode active material of Comparative Example 1, (C) is the SEM image of the positive electrode active material of Comparative Example 2, and (D) is the SEM image of the positive electrode active material of Comparative Example 3.

**Experimental Example 2: Analysis of Degree of Single-Crystal Formation**

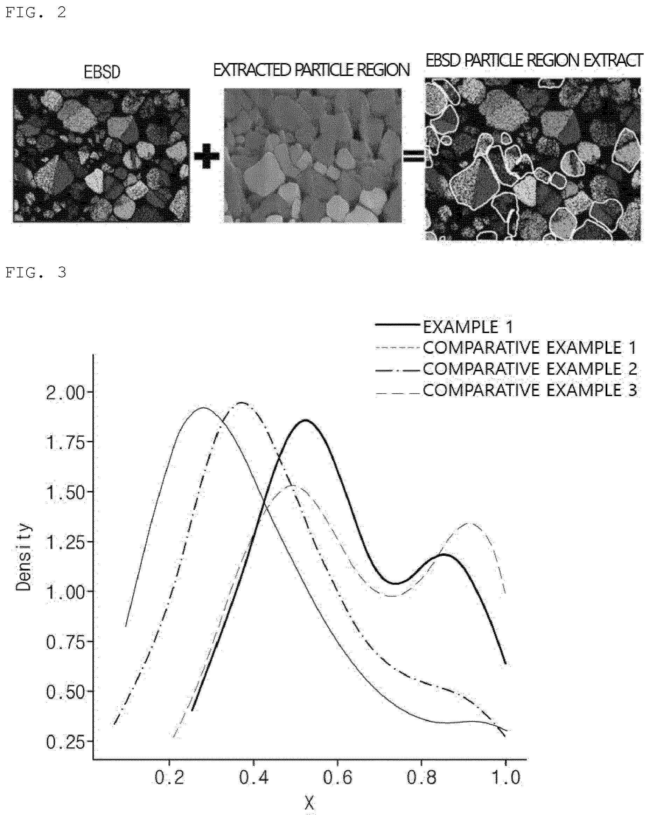

Each of the positive electrode active materials prepared in the example and the comparative examples, a carbon black conductive agent, and a PVDF binder were mixed in an N-methylpyrrolidone (NMP) solvent at a weight ratio of 95:2:3 to prepare a positive electrode slurry. One surface of an aluminum current collector was coated with the positive electrode slurry, dried, and then rolled to prepare a positive electrode. The prepared positive electrode was cut by a focused ion beam (FIB) method to obtain a cross section of the positive electrode, and, after SEM and electron backscatter diffraction (EBSD) images of the same portion were measured to obtain shapes and regions (obtained from the SEM image) of the particles and cross sections (obtained from the EBSD image) of grains within a map, a clustering algorithm was applied to distinguish the grains in the particle, and a degree of single-crystal formation of the positive electrode active material was analyzed through Equation 1 of the present invention. FIG. 2 is a reference view for illustrating extraction of the particles from the EBSD image, wherein it is a view illustrating extraction of particle regions from the EBSD image by applying the particle regions extracted from the SEM image to the EBSD image.

[Equation 1]

$$\chi = \sum_i a_i^2$$

In Equation 1,

when the single particle is composed of i grains, $a_i$ means a value ($A_i/A$) of a cross-sectional area ($A_i$) of an $i_{th}$ grain to a cross-sectional area (A) of the single particle.

Analysis results are presented in Table 2 and FIG. 3 below. FIG. 3 is a graph illustrating distributions of the degrees of single-crystal formation of the positive electrode active materials of Example 1 and Comparative Examples 1 to 3.

[Table 2]

|  | Degree of single-crystal formation |
|---|---|
| Example 1 | 0.645 |
| Comparative Example 1 | 0.45 |
| Comparative Example 2 | 0.49 |
| Comparative Example 3 | 0.79 |

Referring to FIG. 1, FIG. 3, and Table 2, it may be confirmed that the positive electrode active material of Example 1 had a relatively uniform particle size without a large particle in which many particles were aggregated, and, since the number of grains constituting the single particle was smaller than that of Comparative Examples 1 and 2, it may be confirmed that the degree of single-crystal formation was high. With respect to Comparative Example 1, particle growth and single-crystal formation appeared to be relatively less progressed than those of the solid-phase synthesized positive electrode active material of Example 1. Also, with respect to Comparative Example 2, since sintering reaction and grinding did not proceed smoothly, fine and large particles were occasionally present, and thus, it was observed that particle size and degree of single-crystal formation were not uniform. In addition, with respect to Comparative Example 3, it was a sample having an improved degree of single-crystal formation by increasing the sintering temperature, wherein an average particle diameter was increased due to oversintering.

Also, Example 1 and Comparative Examples 1 and 2 showed similar particle diameters, but the BET specific surface area of Example 1 was lower than that of Comparative Examples 1 and 2. Since the number of grains constituting one particle decreases and a grain boundary area decreases as the degree of single-crystal formation of the particle increases, a value of the BET specific surface area is decreased. That is, with respect to Example 1, although the particle size was the same or smaller than that of Comparative Examples 1 and 2, it may be understood that the degree of single-crystal formation was relatively higher than that of Comparative Examples 1 and 2 due to its low BET specific surface area.

Furthermore, the positive electrode active material of Example 1 had a mode of the degrees of single-crystal formation of 0.5 to 0.6, wherein it may be confirmed that it had a higher degree of single-crystal formation on average in comparison to 0.2 to 0.4 of Comparative Examples 1 and 2. In addition, the number of particles with a maximum value of the degree of single-crystal formation of 1 was also found to be greater in Example 1. With respect to Comparative Example 3, the number of particles having a degree of single-crystal formation of 0.8 to 1.0 was increased, but, since properties of the electrode were deteriorated due to oversintering as in Experimental Example 3 below, it did not exhibit desirable properties of a positive electrode material.

**Experimental Example 3**

Each of the positive electrode active materials prepared in the example and the comparative examples, a carbon black conductive agent, and a PVDF binder were mixed in an NMP solvent at a weight ratio of 95:2:3 to prepare a positive electrode slurry. One surface of an Al current collector was coated with the positive electrode slurry, dried, and then rolled to prepare a positive electrode.

A lithium metal electrode was used as a negative electrode, and, after an electrode assembly was prepared by disposing a porous polyethylene separator between the positive electrode and the negative electrode and the electrode assembly was disposed in a battery case, an electrolyte solution was injected into the case to prepare a half-cell. In this case, the electrolyte solution was prepared by dissolving 1.0 M $LiPF_6$ in an organic solvent in which ethylene carbonate (EC) :dimethyl carbonate (DMC):diethyl carbonate (DEC) were mixed in a volume ratio of 2:1:2.

Each of the half-cells thus prepared was charged to 4.25 V in a constant current (0.1 C)-constant voltage (CC(0.1 C)-CV) mode at 25°C, and discharged at 0.1 C to 3.0 V to measure initial charge capacity and initial discharge capacity, and presented in Table 3 below. Also, a percentage of the initial discharge capacity to the initial charge capacity was expressed as efficiency.

[Table 3]

|  | Initial charge capacity (mAh/g) | Initial discharge capacity (mAh/g) | Efficiency (%) |
|---|---|---|---|
| Example 1 | 244.6 | 214.6 | 87.7 |
| Comparative Example 1 | 244.3 | 213.2 | 87.3 |
| Comparative Example 2 | 243.3 | 212.3 | 87.2 |
| Comparative Example 3 | 243.1 | 209.8 | 86.2 |

Referring to Table 3, it may be confirmed that initial charge and discharge capacities and efficiency of the secondary battery including the positive electrode active material according to the present invention were improved.

**Experimental Example 4**

Each of the positive electrode active materials prepared in Example 1 and Comparative Example 1, a Denka Black conductive agent, and a PVDF binder were mixed in an NMP solvent at a weight ratio of 95:2:3 to prepare a positive electrode slurry. One surface of an Al current collector was coated with the positive electrode slurry, dried, and then rolled to prepare a positive electrode.

Next, a negative electrode active material (natural graphite), a conductive agent (carbon black), and a binder (SBR+CMC) were mixed in water at a weight ratio of 95.6:1.5:3.54 to prepare a negative electrode slurry. One surface of a copper (Cu) current collector was coated with the negative electrode slurry, dried, and then rolled to prepare a negative electrode.

After an electrode assembly was prepared by disposing a porous polyethylene separator between the positive electrode and the negative electrode and the electrode assembly was disposed in a battery case, an electrolyte solution was injected into the case to prepare 32 mono-cells each with an electrode size of 3 cm $\times$ 4 cm. In this case, the electrolyte solution was prepared by dissolving 1.0 M $LiPF_6$ in an organic solvent in which ethylene carbonate (EC):ethyl methyl carbonate (EMC):diethyl carbonate (DEC) were mixed in a volume ratio of 3:3:4.

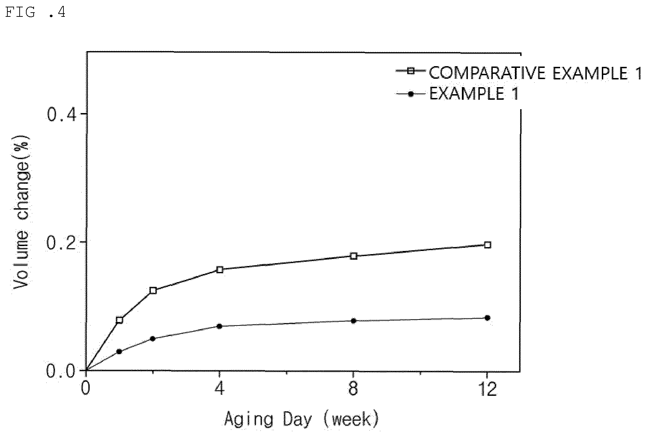

After the 32 mono-cells were charged to 4.25 V in a CC(0.33C)-CV(0.05C cut-off) mode at 25°C, the positive electrodes were separated. The separated positive electrodes were put in a cell pouch, the electrolyte solution was additionally injected, and the cell pouch was then sealed to prepare a sample. An amount of gas generated was measured while the sample was stored at 60°C for 12 weeks, a graph of volume change rate according to storage period is illustrated in FIG. 4, and the amount of gas generated at 12 weeks is presented in Table 4 below.

[Table 4]

|  | Gas generation amount (mL) |
|---|---|
| Example 1 | 0.08 |
| Comparative Example 1 | 0.2 |

Referring to FIG. 4 and Table 4, it may be confirmed that the gas generation amount of the secondary battery including the positive electrode active material according to the present invention was significantly reduced during high-temperature storage.

In conclusion, since the positive electrode active material according to the present invention was in the form of a single particle and included the lithium transition metal oxide with a degree of single-crystal formation (X) of 0.50 to 0.75, it reduced a phenomenon of fine particle generation due to the particle cracking, improved the initial charge and discharge capacities and efficiency of the battery when used as a positive electrode active material in the lithium secondary battery, and reduced the gas generation amount, and thus, it may be understood that it may significantly improve stability of the battery.

**Claims**

1.   A positive electrode active material comprising a lithium transition metal oxide with a degree of single-crystal formation (X) according to Equation 1 of 0.50 to 0.75,

wherein the lithium transition metal oxide is in a form of a single particle:

[Equation 1]

$$X = \sum_i a_i^2$$

wherein, in Equation 1,
when the single particle is composed of i grains, $a_i$ means a value ($A_i/A$) of a cross-sectional area ($A_i$) of an $i_{th}$ grain to a cross-sectional area (A) of the single particle.

2. The positive electrode active material of claim 1, wherein the degree of single-crystal formation (X) is in a range of 0.60 to 0.75.

3. The positive electrode active material of claim 1, wherein the single particle has an average particle diameter ($D_{50}$) of 1.5 $\mu$m or more.

4. The positive electrode active material of claim 1, wherein the single particle has a Brunauer-Emmett-Teller (BET) specific surface area of 0.50 $m^2$/g or less.

5. The positive electrode active material of claim 1, wherein the lithium transition metal oxide is represented by Formula 1:

[Formula 1]   $Li(Ni_{1-x-y-z}Co_xMn_yM_z)O_2$

wherein, in Formula 1,
M is at least one selected from the group consisting of aluminum (Al), iron (Fe), vanadium (V), chromium (Cr), titanium (Ti), tantalum (Ta), magnesium (Mg), and molybdenum (Mo), and
x, y, and z are atomic fractions of independent elements, respectively, wherein $0 \leq x \leq 0.2$, $0 \leq y \leq 0.2$, $0 \leq z < 1$, and $0 \leq x+y+z < 1$.

6. A positive electrode for a lithium secondary battery, the positive electrode comprising the positive electrode active material of any one of claims 1 to 5.

7. A lithium secondary battery comprising the positive electrode for a lithium secondary battery of claim 6.

FIG. 1

(A)

(B)

(C)

(D)

FIG. 2

EBSD     EXTRACTED PARTICLE REGION     EBSD PARTICLE REGION EXTRACT

FIG. 3

——— EXAMPLE 1
·········· COMPARATIVE EXAMPLE 1
—·— COMPARATIVE EXAMPLE 2
— — COMPARATIVE EXAMPLE 3

FIG .4

## INTERNATIONAL SEARCH REPORT

| International application No. |
| --- |
| **PCT/KR2024/004255** |

**A. CLASSIFICATION OF SUBJECT MATTER**

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/525(2010.01); C30B 1/10(2006.01); C30B 29/22(2006.01); H01M 10/052(2010.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive electrode active material), 단입자(single particle), 리튬 전이금속 산화물(lithium transition metal oxide), 결정립(crystal grain), 단결정화도(single-crystallinity), 이차 전지(secondary battery)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2293034 B1 (SK INNOVATION CO., LTD.) 24 August 2021 (2021-08-24)<br>See claims 9 and 16. | 1-7 |
| A | KR 10-2023-0033480 A (SAMSUNG SDI CO., LTD.) 08 March 2023 (2023-03-08)<br>See entire document. | 1-7 |
| A | JP 2008-159495 A (HITACHI MAXELL LTD.) 10 July 2008 (2008-07-10)<br>See entire document. | 1-7 |
| A | KR 10-2022-0135707 A (ECOPRO BM CO., LTD.) 07 October 2022 (2022-10-07)<br>See entire document. | 1-7 |
| A | WO 2022-207008 A1 (BEIJING EASPRING MATERIAL TECHNOLOGY CO., LTD.) 06 October 2022 (2022-10-06)<br>See entire document. | 1-7 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **26 June 2024** | **01 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/004255**

| Patent document cited in search report | | | Publication date (day/month/year) | Patent family member(s) | | | Publication date (day/month/year) |
|---|---|---|---|---|---|---|---|
| KR | 10-2293034 | B1 | 24 August 2021 | CN | 113363439 | A | 07 September 2021 |
| | | | | CN | 113363439 | B | 09 August 2022 |
| | | | | CN | 115275135 | A | 01 November 2022 |
| | | | | EP | 3919445 | A1 | 08 December 2021 |
| | | | | US | 2021-0384505 | A1 | 09 December 2021 |
| KR | 10-2023-0033480 | A | 08 March 2023 | CN | 115732652 | A | 03 March 2023 |
| | | | | EP | 4144703 | A1 | 08 March 2023 |
| | | | | JP | 2023-036062 | A | 13 March 2023 |
| | | | | US | 2023-0082796 | A1 | 16 March 2023 |
| JP | 2008-159495 | A | 10 July 2008 | JP | 5216960 | B2 | 19 June 2013 |
| KR | 10-2022-0135707 | A | 07 October 2022 | CN | 115148985 | A | 04 October 2022 |
| | | | | EP | 4119504 | A1 | 18 January 2023 |
| | | | | EP | 4183749 | A1 | 24 May 2023 |
| | | | | JP | 2022-159119 | A | 17 October 2022 |
| | | | | JP | 2024-001056 | A | 09 January 2024 |
| | | | | JP | 7356532 | B2 | 04 October 2023 |
| | | | | KR | 10-2024-0017880 | A | 08 February 2024 |
| | | | | KR | 10-2024-0018546 | A | 13 February 2024 |
| | | | | US | 2022-0320506 | A1 | 06 October 2022 |
| WO | 2022-207008 | A1 | 06 October 2022 | CN | 114703544 | A | 05 July 2022 |
| | | | | EP | 4159897 | A1 | 05 April 2023 |
| | | | | EP | 4159897 | A4 | 13 December 2023 |
| | | | | JP | 2023-540162 | A | 22 September 2023 |
| | | | | JP | 7398015 | B2 | 13 December 2023 |
| | | | | KR | 10-2023-0098502 | A | 04 July 2023 |
| | | | | KR | 10-2669854 | B1 | 27 May 2024 |
| | | | | US | 2023-0202866 | A1 | 29 June 2023 |

Form PCT/ISA/210 (patent family annex) (July 2022)

**REFERENCES CITED IN THE DESCRIPTION**

**Patent documents cited in the description**

- KR 1020230043513

- KR 1020140093529